# EUROPEAN PATENT APPLICATION

(11) **EP 0 651 171 A2**
(43) Date of publication of application: **03.05.1995**
(21) Application number: 94308015.0
(22) Date of filing: 31.10.1994
(51) Int. Cl.: F16D 43/286, F16D 25/08

(54) **Fluid-pressure operated clutch**

(30) Priority: 28.10.1993 GB 9322249
(71) Applicant: MATRIX ENGINEERING LIMITED, Brechin, Angus, Scotland DD9 7EP (GB)
(72) Inventor: Harris, William Graeme, Angus, Scotland DD11 4TS (GB)
(74) Representative: Freeman, Jacqueline Carol

(57) **Abstract**

A fluid-pressure operated clutch includes plungers (21) provided on a drive member (10) for engaging with sockets (25) provided in a driven member (20), the plungers being operated by supplying pressure fluid to a pressure chamber (32). When a predetermined torque limit is reached or exceeded, cooperating cam surfaces on the plunger and sockets cause the plunger to be displaced, opening an exhaust valve (40) for the pressure fluid, and disengaging the clutch.

## Description

The invention relates to a fluid-pressure operated clutch device of the kind incorporating torque limited means.

The torque limiting means of clutch devices of this kind typically comprise a torque sensor which disables a solenoid valve when a predetermined upper torque limit is sensed. Thus there is known from WO/91/15684 a clutch device incorporating a torque sensor the output of which can be employed to disengage the clutch to prevent overload damage by causing a solenoid valve to cut off the fluid pressure supply to the clutch device.

The invention is concerned with the provision of a clutch device of the kind described in which the torque limiting means are incorporated in the device instead of depending on remotely located components.

The invention accordingly provides a clutch device of the kind described in which mechanical sensing of an upper torque limit effects relief of fluid pressure in the clutch device. The mechanical sensing of the torque limit can be effected by inter-engaging elements arranged for relative movement when the limit is reached, for example, a plunger fully received in a socket during normal operation but displaceable therefrom when the torque limit is reached or exceeded. The relative movement of the inter-engaging elements can be employed to open a discharge passage for the pressure fluid, as by opening an exhaust valve.

In order to effect full disengagement of the clutch device, the opened discharge passage provides for escape of the compressed air or other pressure fluid at a greater rate than it is being supplied. As the discharge passage will be open in the initial, disengaged, condition of the clutch device provision is made for a greater supply of pressure fluid during engagement than during normal running. This can be achieved by supplying the pressure fluid through a flow restrictor during normal operation.

The clutch device of the invention can thus incorporate a pressure fluid exhaust valve arranged to open when a torque limit is reached or exceeded and a pressure fluid supply system comprising valve means connecting a pressure fluid source to the device initially through a non-return valve and through a flow restrictor subsequently, during normal operation. The flow restrictor is preferably by-passed by a non-return valve permitting discharge of the fluid pressure in the device by disconnection from the source when clutch disengagement is required.

The invention is further described below, by way of example, with reference to the accompanying drawings, in which:
Fig. 1 is a sectional side view of a pneumatically controlled clutch device incorporating a torque limiting device in accordance with the present invention;
Fig. 2 is a schematic view of the pneumatic supply and control arrangement of the clutch of Fig. 1; and
Figs. 2a-2d schematically illustrate the operation of the pneumatic supply arrangement of the clutch in different operating conditions.

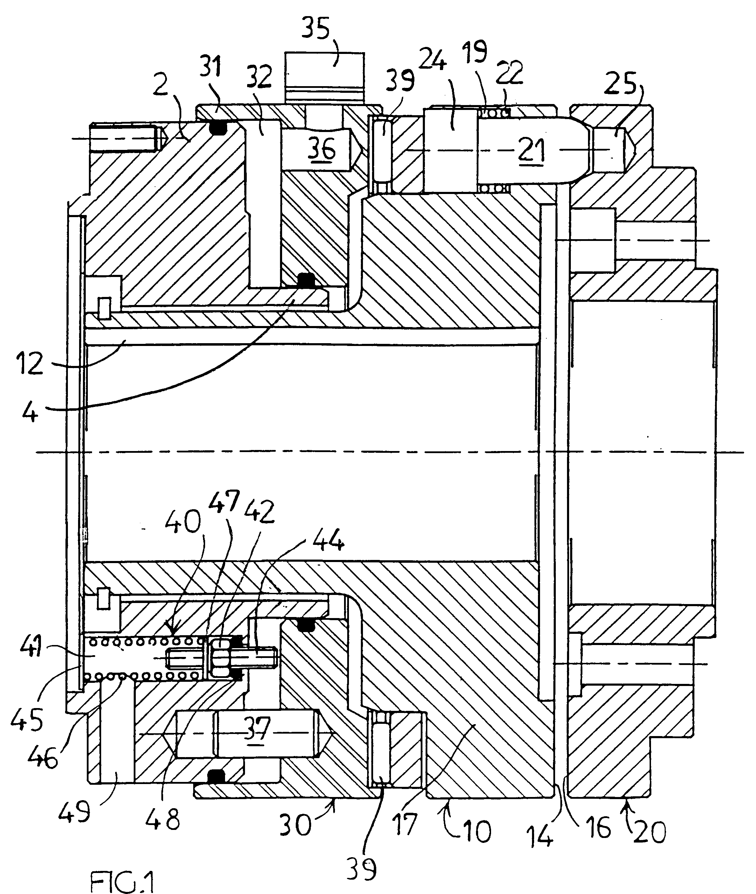

The clutch illustrated in Fig. 1 comprises a fixed housing or support frame of which only an annular support member 2 is illustrated. The support member 2 has a sleeve portion 4 of reduced external diameter projecting towards the right as shown. An annular clutch drive member 10 is journalled within the support member 2 by suitable bearings and a drive shaft (not shown) is received within the drive member to which the shaft is drivingly connected by way of splines 12. The drive member 10 extends outwardly beyond the support member 2 to an end face 14 juxtaposed to the end face 16 of a clutch driven member 20 journalled for rotation about the common axis of the drive shaft and drive member 10.

The end face 14 of the drive member 10 is provided by a portion 17 of external diameter approximating to that of the support member 2 and the driven member 20. The portion 17 has a plurality of bores 19 extending parallel to the clutch axis and located in a ring centred on the axis. The bores 19 open into the face 14 and each contains a slidable plunger 21. A helical compression spring 22 is received between a head portion 24 of each plunger 21 and an annular step within the bore 19 so that movement of the plunger outwardly of the drive member towards the driven member 20 is opposed by the spring.

The end face 16 of the driven member 20 is provided with drive sockets 25 at positions corresponding to those of the plungers 21. The clutch is engaged when the plungers 21 are moved into the sockets 25 to couple the drive and driven members 10 and 20 together. The sockets 25 have outwardly flared ends at the face 16 and the plungers 21 have ball, or part-spherical, outer ends.

Movement of the plungers 21 is effected pneumatically, by means of an annular clutch element 30 received on the sleeve portion 4 of the support member 2 for axially sliding. An outer sleeve portion 31 of the clutch element 30 surrounds the adjacent end of the support member 2 to define between the support member and clutch element a chamber 32 sealed by seal rings. A valve manifold 35 is carried externally of the clutch element and communicates with the chamber 32 by a radially and axially extending passage 36. An axially extending pin 37 having its ends received in recesses in the support member 2 and the clutch element 30 prevents relative rotation of these parts. A bearing 39 around the drive element 10 between the clutch element 30 and the portion 17 permits pressure in the chamber 32 to be applied by way of the clutch element to the plungers 21.

The clutch device as so far described could be operated by communicating the chamber 32 with a source of compressed air to move the clutch element 30 and thus the plungers 21 outwardly into the sockets 25 to effect clutch engagement. Release of the pressure within the chamber 32 would effect disengagement by withdrawal of the plungers 21 under the action of the springs 22.

In accordance with the invention however the torque transmitted through the clutch is limited by control of the air pressure applied to the chamber 32 effected in part by an exhaust valve 40 incorporated in the support member 2. The exhaust valve 40 comprises a bore 41 extending parallel to the clutch axis and having a restricted portion by which it communicates with the chamber 32. A valve assembly in the bore 41 comprises a nut 42 threaded on a stem 44. An end plate 45 closes the end of the bore 41 remote from the chamber 32 and provides a seating for a helical compression spring 46 seated at its other end on a washer 47 around the stem adjacent the nut. A seal ring 48 is received between the nut and the step between the larger and smaller diameter portions of the bore. The bore 41 communicates to atmosphere by a radial passage 49.

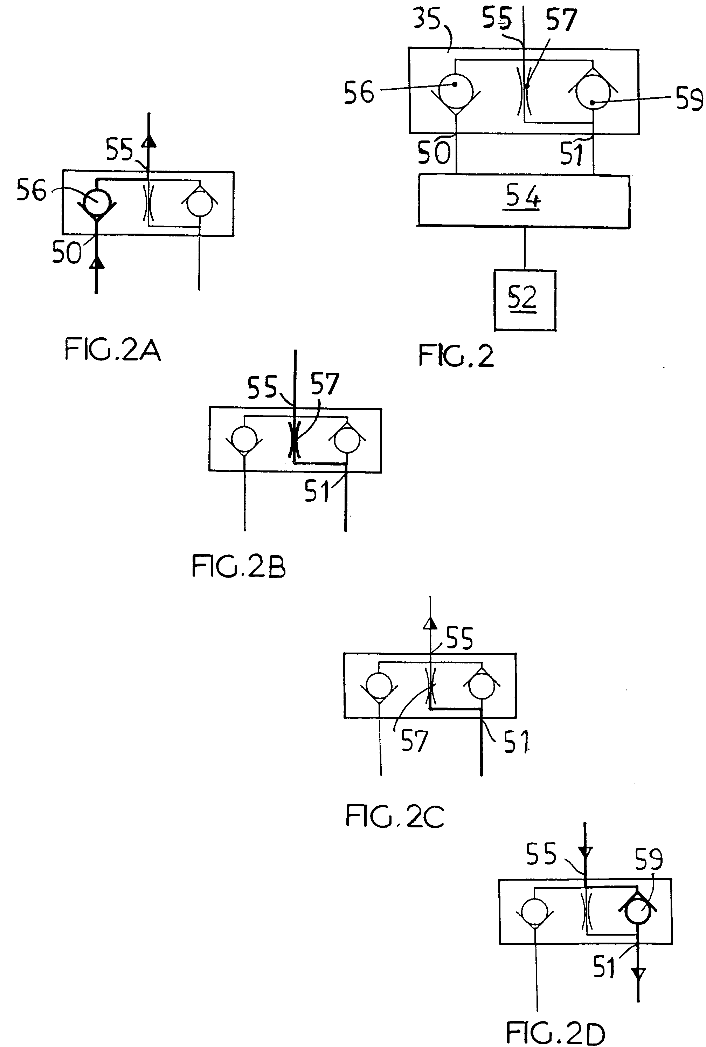

The valve manifold 35, as shown schematically in Fig. 2, comprises first and second inlets 50 and 51 either of which can be connected to a compressed air source 52 by operation of a control valve 54. The first inlet 50 communicates with an outlet 55 communicating with the passage 36 and thus with the chamber 32 by way of a non-return engaging valve 56 permitting air to flow into the chamber, but not to escape from it. The second inlet 51 communicates with the outlet 55 by way of a choke or flow restrictor 57. The flow restrictor 57 is by-passed by a disengaging non-return valve 59 which allows air flow in the direction from the outlet 55 to the second inlet port 51 but not in the reverse direction.

To engage the clutch, the control valve 54 is operated to supply compresses air from the source 52 as indicated in Fig. 2a, to the first inlet 50 and thus to the chamber 32.

In the initial disengaged condition of the clutch, the plungers 21 are held withdrawn from the drive sockets 25 by the springs 22 and the clutch element 30 is accordingly in engagement with the exhaust stem 44 to hold the exhaust valve open. The sizes of the components are however so chosen that pressure nevertheless builds up in the chamber 32, to move the clutch element 30 to the right as shown and thus engage the plungers into the drive sockets. By the time the plungers 21 and sockets 25 are fully synchronised and the clutch device is fully engaged, the chamber 32 has expanded to allow the exhaust valve 40 to close under the action of the spring 46. The control valve 54 is then operated to maintain the clutch in the engaged condition by supplying a reduced air pressure to the chamber 32 by way of the second port 51 and the flow restrictor 57. This condition is represented by Fig. 2b.

If now the torque transmitted through the clutch exceeds a certain predetermined upper limit, the plungers 21 will begin to be forced outwardly of the drive sockets 25 with corresponding movement of the clutch element 30 until the exhaust valve 40 opens.

Disengagement of the clutch device then follows as indicated in Fig. 2c, because the effect of the flow restrictor 57 is that air escapes from the chamber 32 through the exhaust valve 40 at a greater rate that it enters through the outlet 55.

The clutch device can be re-engaged after such disengagement by operating the control valve 54 to connect the source 52 with the first inlet 50.

Disengagement of the clutch device from the normal engagement condition is effected by movement of the control valve 54 to disconnect the source 52 entirely from the manifold 35. Air from the chamber 32 then escapes by way of the disengaging valve 59, as indicated in Fig. 2d.

If desired, a pressure switch can be fitted to the chamber 32 to give an indication to the user that an overload condition has occurred. The position of the clutch element 30 at which the exhaust valve opens can be adjusted by movement of the nut 42 along the screw-threaded stem 44 and the torque value at which disengagement occurs can be controlled remotely by changing the pressure of the air supply from the source 52.

The invention can be embodied otherwise than as specifically shown and illustrated.

## Claims

1. A fluid-pressure operated clutch device for engaging a driven member with a drive member on the application of fluid pressure, comprising torque limiting means in which mechanical sensing of a predetermined upper torque limit effects relief of fluid pressure in the clutch device to disengage the clutch.

2. A clutch as claimed in claim 1, in which the mechanical sensing of the torque limit is effected by inter-engaging elements arranged for relative movement when the limit is reached.

3. A clutch as claimed in claim 2 or 3, in which the inter-engaging elements are mounted in fixed relation to the drive member and driven member respectively so as to effect engagement of the clutch.

4. A clutch as claimed in claim 2 or 3, in which the inter-engaging elements comprise at least one plunger, the or each plunger being arranged to be received in a corresponding socket during normal operation in the engaged condition of the clutch, and to be displaced therefrom when the torque limit is reached or exceeded.

5. A clutch as claimed in claim 4, in which the or each plunger and socket have cooperating camming surfaces for effecting the displacement of the plunger.

6. A clutch as claimed in any one of claims 2-5, in which the relative movement of the inter-engaging elements causes a discharge passage for the pressure fluid to open.

7. A clutch as claimed in claim 6, in which, in the engaged condition of the clutch, the discharge passage, when open, provides for escape of the pressure fluid at a greater rate than that at which it is supplied.

8. A clutch as claimed in claim 6 or 7, in which, in the disengaged condition of the clutch, the discharge passage is open and a greater supply of pressure fluid is provided on engagement than in the fully engaged condition thereof.

9. A clutch as claimed in claim 8, in which the pressure fluid is supplied through a flow restrictor in the fully engaged condition of the clutch.

10. A clutch as claimed in any one of the preceding claims in which the pressure fluid supply system comprises valve means for connecting a pressure fluid source to the device through a non-return valve in the disengaged condition of the clutch, and through a flow restrictor in the engaged condition of the clutch.

11. A clutch as claimed in claim 10, in which the flow restrictor is by-passed by a non-return valve permitting discharge of the fluid pressure in the device by disconnection from the source when clutch disengagement is required.

12. A fluid pressure operated clutch device comprising a pressure fluid exhaust valve arranged to open when a torque limit is reached or exceeded and a pressure fluid supply system comprising valve means for connecting a pressure fluid source to the device through a non-return valve in the disengaged condition of the clutch and through a flow restrictor in the engaged condition of the clutch.

13. A clutch as claimed in claim 8, in which the flow restrictor is by-passed by a non-return valve permitting discharge of the fluid pressure in the device by disconnection from the source when clutch disengagement is required.
